(19)

Europäisches
Patentamt
European
Patent Office
Office européen
des brevets

(11) **EP 3 761 562 A1**

(12) **EUROPEAN PATENT APPLICATION**
published in accordance with Art. 153(4) EPC

(43) Date of publication:
06.01.2021 Bulletin 2021/01

(21) Application number: 19775074.8

(22) Date of filing: 26.02.2019

(51) Int Cl.:
*H04L 12/24* (2006.01)

(86) International application number:
PCT/CN2019/076124

(87) International publication number:
WO 2019/184640 (03.10.2019 Gazette 2019/40)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 26.03.2018 CN 201810260956

(71) Applicant: HUAWEI TECHNOLOGIES CO., LTD.
Shenzhen, Guangdong 518129 (CN)

(72) Inventors:
• SONG, Wei
  Shenzhen, Guangdong 518129 (CN)
• ZHANG, Zhenwei
  Shenzhen, Guangdong 518129 (CN)

(74) Representative: Körber, Martin Hans
Mitscherlich PartmbB
Patent- und Rechtsanwälte
Sonnenstrasse 33
80331 München (DE)

(54) **INDICATOR DETERMINATION METHOD AND RELATED DEVICE THERETO**

(57) Embodiments of this application provides an indicator determining method and a related device, to predict KQI results of different services by using a network KPI parameter. The method of the embodiments of this application includes: obtaining to-be-predicted data of a service, where the to-be-predicted data includes a key performance indicator KPI of a network in which the service is located and a type identifier of the service, and the type identifier is used to indicate a type of the service; determining, based on the type identifier, a target predictive model in a predictive model set, where the predictive model set includes at least one predictive model, and each predictive model in the predictive model set corresponds to one service type; and determining, based on the target predictive model and the KPI in the to-be-predicted data, a key quality indicator KQI of the service.

```
┌─────────────────────────────────────────┐
│  Obtain to-be-predicted data of a service │──── 201
└─────────────────────────────────────────┘
                    │
                    ▼
┌─────────────────────────────────────────┐
│ Determine, based on a type identifier, a target │──── 202
│   predictive model in a predictive model set    │
└─────────────────────────────────────────┘
                    │
                    ▼
┌─────────────────────────────────────────┐
│  Determine, based on the target predictive │──── 203
│  model and a KPI in the to-be-predicted data, a │
│          KQI of the service              │
└─────────────────────────────────────────┘
```

FIG. 2a

# Description

## CROSS-REFERENCE TO RELATED APPLICATIONS

This application claims priority to Chinese Patent Application No. 201810260956.3, filed with the Chinese Patent Office on March 26, 2018, and entitled "INDICATOR DETERMINING METHOD AND RELATED DEVICE", which is incorporated herein by reference in its entirety.

## TECHNICAL FIELD

This application relates to the field of data analysis, and in particular, to an indicator determining method and a related device.

## BACKGROUND

A network key performance indicator (key performance indicator, KPI) is an indicator used to measure network performance, including a speed rate, a bandwidth, a latency, a packet loss rate, a throughput rate, and the like. A key quality indicator (key quality indicators, KQI) is a service quality parameter focusing on user experiences for different services.

In a common system, a user experience result of a service run on an application is usually represented by the KQI. A reason why user experience results of the service are different may be a defect of a design of the application, or may be freezing, instability, and the like of a network connected to the service. Therefore, a network status of the network connected to the service also becomes one of the parameters that evaluate user experience. In an existing training model, a KQI is predicted by analyzing network KPI data. The training model can be generated by collecting a large amount of KPI data, and a larger data volume generally indicates a more accurate result of the training model.

However, in an existing solution in which the network KPI is associated to a service KQI by using a machine learning method, the service KQI is considered merely from a perspective of the network KPI, and precision of the KQI obtained by predicting by the training model is limited.

## SUMMARY

Embodiments of this application provides an indicator determining method and a related device, to predict KQI results of different services by using a network KPI parameter.

According to a first aspect of this application, an indicator determining method is provided. The method includes:
obtaining to-be-predicted data of a service, where the to-be-predicted data includes a KPI parameter of a network in which the service is located and a type identifier of the service, and the KPI parameter of the network in which the service is located is KPI data of the network to which the service is connected.

The KPI data of the network includes at least one of the following parameters: a time of the network, signal strength, a packet loss rate, a channel utilization rate, a media access control MAC address of a network device, a terminal vendor, a MAC address of a terminal, a latency, a jitter, a negotiated sending rate, a sending rate, a receiving rate, and a negotiated receiving rate.

The type identifier of the service may indicate a type of the service, such as a video service, a voice service, a multimedia service, or the like, and the video service, the voice service and the multimedia service have different identifiers.

Subsequently, a target predictive model is determined, based on the type identifier of the service, in a predictive model set. Because different service types correspond to different predictive models, the predictive model set includes at least one predictive model, and each predictive model corresponds to one service type.

The KPI in the to-be-predicted data is substituted in the target predictive model, to obtain a KQI result of the service.

This embodiment of this application has the following advantages: An analysis apparatus obtains the to-be-predicted data of the service, where the to-be-predicted data includes the service type identifier of the service, and the service type identifier may indicate a target service type of the service. Then the analysis apparatus determines the target predictive model based on the target service type of the service, and determines the key quality indicator KQI of the service by using the target predictive model. In this embodiment of this application, when the KQI of the service is predicted by using the network KPI parameter, it is considered that services of different service types have different predictive models, so that the KQI result of the service predicted by using the network KPI parameter is more accurate.

Based on the first aspect, in a first implementation of the first aspect, before the determining, based on the type identifier of the service, a target predictive model in a predictive model set, the method further includes:

obtaining a sample data set, where the sample data set includes at least one piece of sample data, and each piece of sample data in the sample data set includes the KPI of the network in which the service is located;
determining a service KQI corresponding to each piece of sample data in the sample data set;
generating a first training record based on the sample data set of the service and the service KQI corresponding to each piece of sample data in the sample data set; and
generating the target predictive model by training a model based on the first training record, and adding the target predictive model to the predictive model set.

In this embodiment, a training process of the target predictive model is described, to increase feasibility of the solution.

Based on the first implementation of the first aspect, in a second implementation of the first aspect, the generating the target predictive model based on the first training record includes:

separately determining, based on the first training record, weight coefficients of a support vector machine SVM model, a random forest model, and a logistic regression model in the target predictive model.

In this embodiment, the weight coefficients of the support vector machine SVM model, the random forest model, and the logistic regression model in the target predictive model are referred to as, after the support vector machine SVM model, the random forest model, and the logistic regression model generate KQI values based on the to-be-predicted KPIs, a percentage of a KQI result value determined by each model in a KQI result determined by the target predictive model.

Subsequently, the target predictive model is generated based on the weight coefficients of the support vector machine SVM model, the random forest model, and the logistic regression model in the target predictive model.

In this embodiment, a percentage status of the support vector machine SVM model, the random forest model, and the logistic regression model in the target predictive model is described, to increase feasibility of the solution.

Based on the first implementation and the second implementation of the first aspect, in a third implementation of the first aspect, the sample data set includes first sample data, second sample data, and third sample data, a first KQI corresponding to the first sample data is less than a second KQI corresponding to the second sample data, the second KQI corresponding to the second sample data is less than a third KQI corresponding to the third sample data, and data volumes of the first sample data, the second sample data, and the third sample data are equal.

In this embodiment, a sampling manner for the sample data is described, to increase reasonability of solution implementation.

Based on the first implementation and the second implementation of the first aspect, in a fourth implementation of the first aspect, the sample data set includes fourth sample data, and a fourth KQI corresponding to the fourth sample data is less than a preset KQI threshold.

In this embodiment, sample data with a low KQI is collected by restricting the fourth KQI to be less than the preset KQI threshold, and low KQI means that the KQI result is poor.

In this embodiment, another sampling manner for the sample data is described, to increase flexibility of solution implementation.

Based on the second implementation of the first aspect, in a fifth implementation of the first aspect, the weight coefficients of the SVM model, the random forest model, and the logistic regression model in the target predictive model are respectively X, Y and Z, and a result value Q predicted by the target predictive model = X * a result value predicted by the SVM model + Y * a result value predicted by the random forest model + Z * a result value predicted by the logistic regression model.

In this embodiment, an algorithm used by the target predictive model to predict the result value is described, to increase integrity of the solution.

Based on the fifth implementation of the first aspect, in a sixth implementation of the first aspect, the type of the service is a video service, the result value Q predicted by the target predictive model = x1 * the result value predicted by the SVM model + y1 * the result value predicted by the random forest model + z1 * the result value predicted by the logistic regression model, and x1 > y1 > z1.

In this embodiment, in a possible case in which the type of the service is the video service, a percentage of the result value predicted by the SVM model in the total result value of the target predictive model is the greatest.

In this embodiment, this embodiment is described with reference to a specific application scenario, to increase feasibility of the solution.

Based on the fifth implementation of the first aspect, in a seventh implementation of the first aspect, the type of the service is a voice service, the result value Q predicted by the target predictive model = x2 * the result value predicted by the SVM model + y2 * the result value predicted by the random forest model + z2 * the result value predicted by the logistic regression model, and y2 > x2 > z2.

In this embodiment, in a possible case in which the type of the service is the voice service, a percentage of the result value predicted by the random forest model in the total result value of the target predictive model is the greatest.

In this embodiment, this embodiment is described with reference to another specific application scenario, to increase flexibility of solution implementation.

Based on the fifth implementation of the first aspect, in an eighth implementation of the first aspect, the type of the service is a multimedia service, the result value Q predicted by the target predictive model = x3 * the result value predicted by the SVM model + y3 * the result value predicted by the random forest model + z3 * the result value predicted by the logistic regression model, and z3 > y3 > x3.

In this embodiment, in a possible case in which the type of the service is the multimedia service, a percentage of the result value predicted by the logistic regression model in the total result value of the target predictive model is the greatest.

In this embodiment, this embodiment is described with reference to another specific application scenario, to increase flexibility of solution implementation.

Based on the method according to any implementation of the first implementation and the second implementation of the first aspect or the fifth implementation to the eighth implementation of the first aspect, in a ninth implementation of the first aspect, after the determining, based on the target predictive model and the KPI in the to-be-predicted data, a key quality indicator KQI of the service, the method further includes:

generating the KQI result after inputting the to-be-predicted data into the target predictive model, and generating a second training record by recording the to-be-predicted data and the corresponding KQI result; and
adjusting a target predictive model parameter based on the second training record and a KQI value of the to-be-predicted data in an actual case.

In this embodiment, an optimization process of the target predictive model is described, to make the predicted result of the target predictive model more accurate.

According to a second aspect of this application, an analysis apparatus is provided. The analysis apparatus includes:

an obtaining unit, configured to obtain to-be-predicted data of a service, where the to-be-predicted data includes a key performance indicator KPI of a network in which the service is located and a type identifier of the service, and the type identifier is used to indicate a type of the service; and
a determining unit, configured to determine, based on the type identifier, a target predictive model in a predictive model set, where the predictive model set includes at least one predictive model, each predictive model in the predictive model set corresponds to one service type, and
the determining unit is further configured to determine, based on the target predictive model and the KPI in the to-be-predicted data, a key quality indicator KQI of the service.

In this embodiment, when the KQI of the service is predicted by using the network KPI parameter, it is considered that services of different service types have different predictive models, so that the KQI result of the service predicted by using the network KPI parameter is more accurate.

Based on the second aspect, in a first implementation of the second aspect, the analysis apparatus further includes a generation unit.

The obtaining unit is further configured to obtain a sample data set of the service, where the sample data set includes at least one piece of sample data, and each piece of sample data in the sample data set includes the KPI of the network in which the service is located.

The generation unit is configured to: determine a service KQI corresponding to each piece of sample data in the sample data set, generate a first training record based on the sample data set of the service and the service KQI corresponding to each piece of sample data in the sample data set, generate the target predictive model based on the first training record, and add the target predictive model to the predictive model set.

In this embodiment, a training process of the target predictive model is described, to increase feasibility of the solution.

Based on the first implementation of the second aspect, in a second implementation of the second aspect, when generating the target predictive model based on the first training record, the generation unit is configured to:

separately determine, based on the first training record, weight coefficients of a support vector machine SVM model, a random forest model, and a logistic regression model in the target predictive model; and
generating the target predictive model based on the weight coefficients of the support vector machine SVM model, the random forest model, and the logistic regression model in the target predictive model.

In this embodiment, a generation process of the target predictive model is described, to increase integrity of solution implementation.

Based on the first implementation and the second implementation of the second aspect, in a third implementation of the second aspect, the analysis apparatus further includes an update unit.

The generation unit is further configured to generate a second training record of the KPI in the to-be-predicted data and the key quality indicator KQI corresponding to the KPI in the to-be-predicted data.

The update unit is configured to update the target predictive model based on the second training record.

In this embodiment, a process in which the to-be-predicted data is reversed as the sample data to update the model is described, to optimize the target predictive model.

According to a third aspect of this application, an analysis apparatus is provided. The analysis apparatus includes a memory and a processor.

The memory is configured to store a program and an instruction.

The processor is configured to invoke the program and the instruction in the memory, to perform the method according to the first aspect and any implementation of the first implementation to the ninth implementation of the first aspect.

According to a fourth aspect of this application, a computer-readable storage medium is provided. The computer-readable storage medium stores an instruction, and when the instruction is run on a computer, the computer is enabled to perform the methods according to the foregoing aspects.

According to a fifth aspect of this application, a computer program product including an instruction is provided, and when the computer program product is run on a computer, the computer is enabled to perform the methods according to the foregoing aspects.

## BRIEF DESCRIPTION OF DRAWINGS

FIG. 1a is a schematic structural diagram of an analysis apparatus according to this application;
FIG. 1b is another schematic structural diagram of an analysis apparatus according to this application;
FIG. 1c is another schematic structural diagram of an analysis apparatus according to this application;
FIG. 1d is another schematic structural diagram of an analysis apparatus according to this application;
FIG. 1e is another schematic structural diagram of an analysis apparatus according to this application;
FIG. 2a is a schematic diagram of an embodiment of an indicator determining method according to this application;
FIG. 2b is a schematic diagram of another embodiment of an indicator determining method according to this application;
FIG. 3 is a schematic diagram of an association relationship between a network KPI and a service KQI;
FIG. 4 is a schematic diagram of a sampling manner for sample data;
FIG. 5 is a schematic diagram of another embodiment of an indicator determining method according to this application;
FIG. 6 is a schematic diagram of another embodiment of an indicator determining method according to this application;
FIG. 7 is another schematic structural diagram of an analysis apparatus according to this application;
FIG. 8 is another schematic structural diagram of an analysis apparatus according to this application; and
FIG. 9 is another schematic structural diagram of an analysis apparatus according to this application.

## DESCRIPTION OF EMBODIMENTS

This application provides an indicator determining method, to predict a service KQI based on a network KPI. The service KQI is mainly referred to as user experience of a service, and better user experience corresponds to a higher service KQI value. There are many factors affecting user experience. Internal factors of a user are uncontrollable factors, and those are not explored in this application. External factors affecting user experience of the service mainly includes performance of user equipment. In addition, performance of a network used by the user is also an important factor. In this application, a relationship between a network KPI parameter and a service KQI is established in a manner of model training. In this application, indicator determining and model training are performed by an analysis apparatus.

In the embodiments of this application, the analysis apparatus is an apparatus capable of data analysis, and the analysis apparatus may be a server or a terminal. There are several cases of a composition structure of the analysis apparatus below.

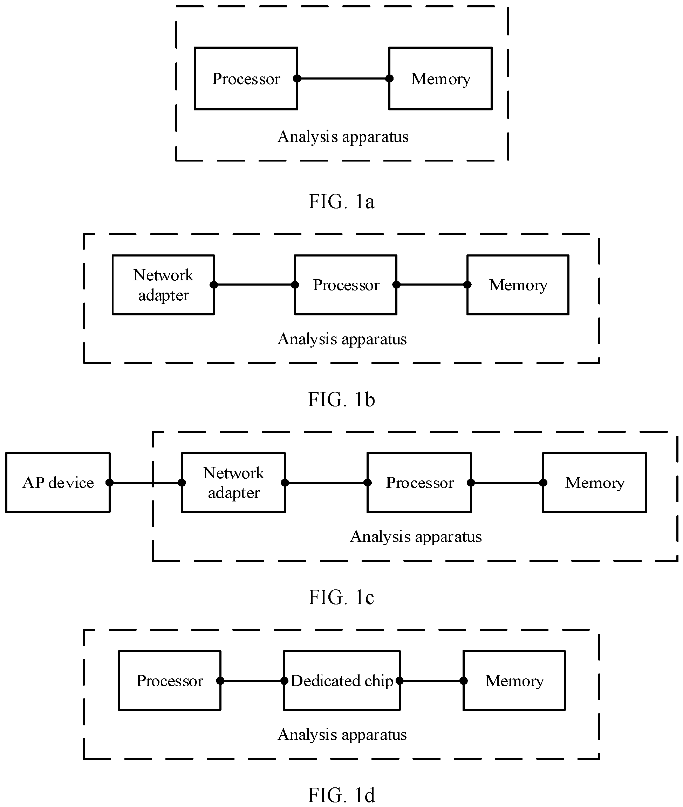

A: Referring to FIG. 1a, the analysis apparatus includes a processor and a memory (storage), the processor is configured to generate a predictive model after analyzing and processing KPI data inputted by another device, and the memory is configured to store the predictive model.

B: Referring to FIG. 1b, the analysis apparatus includes a network adapter, a processor and a memory, the network adapter is configured to collect KPI data from a network side, the processor is configured to process the KPI data collected by the network adapter and generate a predictive model, and the memory is configured to store the predictive model.

C: Referring to FIG. 1c, a wireless access point (access point, AP) is configured to connect a wireless network, and send network KPI data to the analysis apparatus, so that the analysis apparatus can perform an analyzing and processing step that is similar to the step shown in FIG. 1b.

D: Referring to FIG. ld, the analysis apparatus includes a dedicated chip, a processor and a memory, the processor is configured to analyze and process inputted data to generate a predictive model, the dedicated chip is configured to accelerate the data processing procedure, where a time to generate the predictive model and a time to generate a predicted result by using the predictive model can be shortened by using the dedicated chip, and the memory is configured to store the predictive model. In this embodiment, the analysis apparatus may further include a network adapter. In this case, the data inputted into the processor can be obtained by the analysis apparatus. If the analysis apparatus does not include the network adapter, the data inputted into the processor is sent to the analysis apparatus after the data is obtained by another device.

In the analysis apparatuses shown in FIG. 1a to FIG. ld, most of the memories are disks. In addition to the disks, the memory may alternatively be a memory of the analysis apparatus, and this is not limited herein.

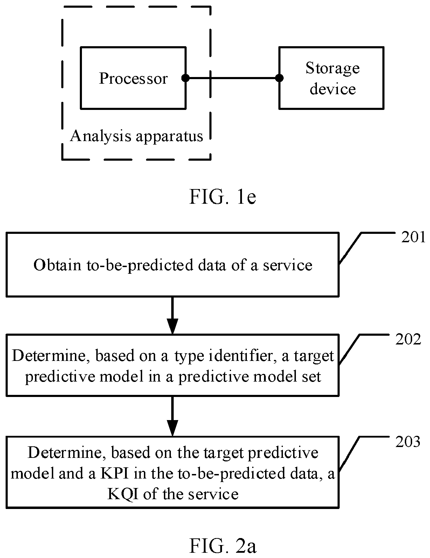

E: Referring to FIG. 1e, the analysis apparatus and a storage device are different devices. The analysis apparatus includes a processor, and the processor stores, after processing inputted data and generating a predictive model, the predictive model in the storage device. In this case, the predictive model is stored in an independent storage device, and can be used by another device other than the analysis apparatus.

In this application, when the analysis apparatus is analyzing and processing the network KPI data to predict the service KQI, a type of the service is further considered. There are different target predictive models for different types of services. Referring to FIG. 2a, an indicator determining method of this application is described below.

201. Obtain to-be-predicted data of a service.

The to-be-predicted data of the service includes a key performance indicator KPI of a network to which the service is connected and a type identifier of the service, and the type identifier of the service may indicate a type of the service.

The KPI of the network includes at least one of the following parameters: a time, signal strength, a packet loss rate, a channel utilization rate, a media access control (media access control, MAC) address of a network device, a terminal vendor, a MAC address of a terminal, a latency, a jitter, a negotiated sending rate, a sending rate, a receiving rate and a negotiated receiving rate.

The type identifier of the service may be a code (for example, 001, 011, and the like) or a name of the service (for example, a video, a web page, a voice, and the like), and this is not specifically limited herein.

202. Determine, based on the type identifier, a target predictive model in a predictive model set.

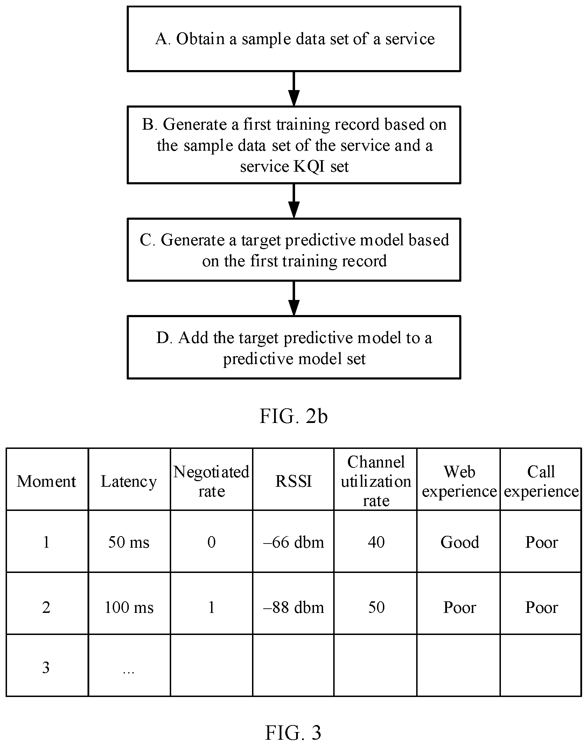

As shown in FIG. 3, a network KPI includes a moment, a latency, a negotiated rate, a received signal strength indicator (received signal strength indication, RSSI), and a channel utilization rate. User experience of different service (for example, a web service and a call service) under a same network KPI is different. For example, in FIG. 3, for KPI data corresponding to a moment 1, web experience of a user is good, but calling experience of the user is poor. Therefore, when performing data analysis, the analysis apparatus determines different target predictive models for different types of services. There is a one-to-one correspondence between the predictive model and the service type. Because there are a plurality of types of services, the predictive models formed by the analysis apparatus are a set, and the analysis apparatus needs to determine, based on the type identifier of the service, the target predictive model in the trained predictive model set.

In this embodiment, the type of the service may be a multimedia service, a voice service, and a video service. The multimedia service may further be web page browsing, gaming, live broadcast, and the like, the voice service may be a voice call, and the video service may be an H.265 video, an MP4 video and a moving picture experts group (moving pictures experts group, MPEG2) video. The type of the service may further have more other cases, and this is not specifically limited herein.

A predictive model training process is a process of analyzing and calculating, by the analysis apparatus, sample data after obtaining the sample data. Referring to FIG. 2b, the process is described below.

A: Obtain a sample data set of the service, and determine a service KQI corresponding to each piece of sample data in the sample data set.

The sample data set includes at least one network KPI parameter. For example, in FIG. 3, the latency is 50 ms, the negotiated rate is 0, the RSSI is -66 dbm, and the channel utilization rate is 40. The series of network parameters form one network KPI in this embodiment of this application.

Different network KPIs have different user experience, and have different KQI values. Therefore, each network KPI corresponds to a unique KQI, and the unique correspondence thereof includes the following two cases:

    1. Each network KPI is in a one-to-one correspondence with each service KQI result. For example, a service KQI result generated by a network KPI is good, and a service KQI result generated by another network KPI is poor.

    2. Different network KPIs correspond to a same KQI result. For example, a service KQI result generated by a network KPI is good, and a service KQI result generated by another network KPI is also good.

In a machine learning method in this embodiment, sample data collection for the predictive model should consider the following:

    1. The collected sample data set includes fourth sample data.

    In this embodiment, there are relatively few summaries about a network KPI corresponding to a low KQI, causing a large quantity of inaccurate prediction cases. Therefore, when data is collected, a case in which user experience is relatively poor should be considered, to ensure integrity and reliability of an established predictive model. For example, when the data is collected, many common fault models, for example, a series of network statuses such as a low signal, high interference, a large background flow, and the like, can be injected. Therefore, collection of the fourth sample data should be considered. A fourth KQI corresponding to the fourth sample data is less than a preset KQI threshold (that is, a critical value of a low KQI result that is determined by the analysis apparatus). The fourth sample data includes one or more pieces of KPI data, and a larger data volume indicates a more accurate predictive model.

    2. The collected sample data set includes first sample data, second sample data, and third sample data.

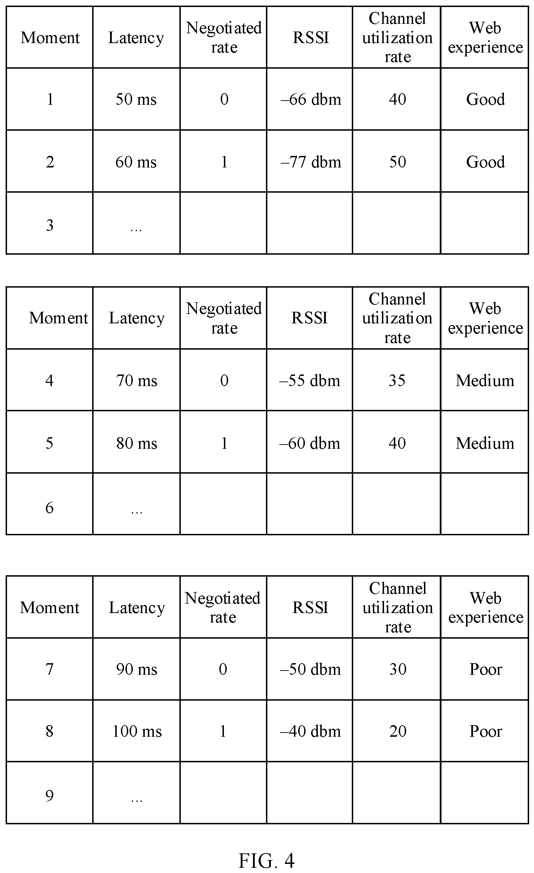

In a process of model training, in addition to the injection of many fault models in the solution, that is, collection of low KQI data, proportionality of data collection needs to be further considered. Therefore, in data collection, percentages of each data should be almost the same. Therefore, the obtained sample data includes the first sample data, the second sample data and the third sample data. A first KQI corresponding to the first sample data is less than a second KQI corresponding to the second sample data, and the second KQI corresponding to the second sample data is less than a third KQI corresponding to the third sample data. The third KQI may be a low KQI. Referring to FIG. 4, for example, in a process of generating a predictive model of a web browsing service, equal amounts of KPI data with good, medium and poor KQI results are separately obtained, to ensure proportionality of good, medium, and poor data, so that a predictable range of the predictive model is more comprehensive, and the result is more accurate.

B: Generate a first training record based on the sample data set of the service and a service KQI set.

The sample data set of the service and the KQI corresponding to each piece of sample data of the service are recorded to generate the first training record.

C: Generate the target predictive model based on the first training record.

In this embodiment, the target predictive model is a model obtained by training, by the analysis apparatus after obtaining the sample data of the service, the sample data. The analysis apparatus establishes, based on the first training record, an association relationship between a KPI parameter and a user experience KQI parameter, that is, the analysis apparatus determines an algorithm formula for the target predictive model.

D: Add the target predictive model to the predictive model set.

203. Determine, based on the target predictive model and the KPI in the to-be-predicted data, a KQI of the service.

The analysis apparatus performs service KQI prediction based on the determined target predictive model.

In this embodiment, the analysis apparatus generates a predictive model by analyzing network KPI data and service KQI data in a machine learning manner, and predicts the service KQI based on the network KPI data by using the predictive model.

In this embodiment, when the KQI of the service is predicted by using the network KPI parameter, it is considered that services of different service types have different predictive models, so that the KQI result of the service predicted by using the network KPI parameter is more accurate.

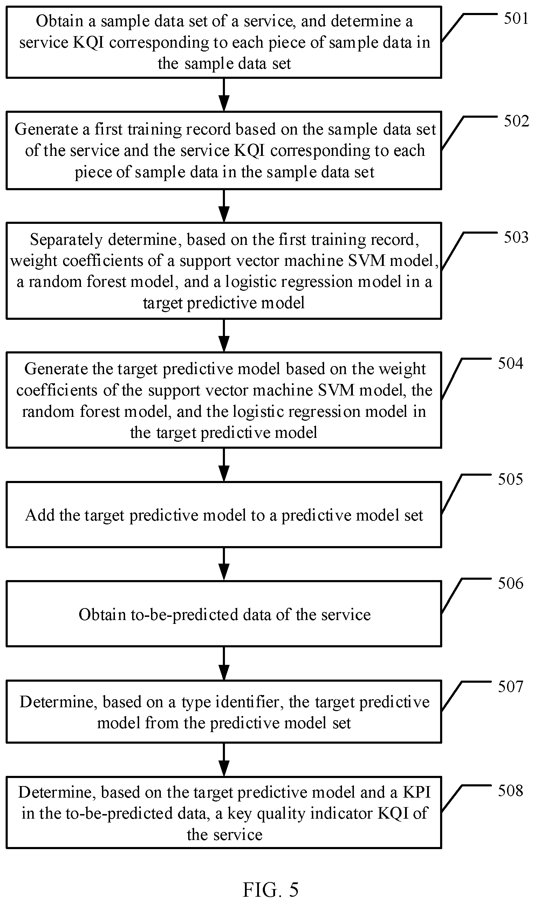

In the embodiments, the target predictive model is integration of three models. A result predicted by each of the three models has a particular weight coefficient in a predicted result value of the target predictive model, the weight coefficients are respectively denoted as X, Y and Z. A training process of the target predictive model is also a determining process for the weight coefficients X, Y and Z. In addition, algorithms of the foregoing three models are determined in the model training process. Referring to FIG. 5, the algorithms are described below.

501: Obtain a sample data set of a service, and determine a service KQI corresponding to each piece of sample data in the sample data set.

502: Generate a first training record based on the sample data set of the service and the service KQI corresponding to each piece of sample data in the sample data set.

In this embodiment, embodiment step 501 and step 502 are similar to embodiment step A and step B in step 202, and they are not specifically described herein again.

503. Separately determine, based on the first training record, weight coefficients of a support vector machine SVM model, a random forest model, and a logistic regression model in a target predictive model.

In this embodiment, in the training process of the target predictive model, the weight coefficients of the support vector machine SVM model, the random forest model, and the logistic regression model in the target predictive model needs to be determined, and the first training record needs to be separately substituted into the three types of models to obtain the algorithm formulas of the three types of models.

A fundamental principle of a support vector machine (support vector machine, SVM) model is: Given a sample set including a positive example and a negative example, an objective of the SVM is to find a hyperplane to segment a sample based on the positive example and the negative example. An algorithm formula of the support vector machine model is: $g(x) = w^T x + b$. The first training record is substituted into the SVM algorithm formula to obtain values of w and b through training. The values are made into constants, and the SVM algorithm formula becomes a function formula between a dependent variable $g(x)$ and an independent variable x, x is used to indicate the KPI, and $g(x)$ is used to indicate the KQI. Therefore, the SVM can predict, by using the network KPI, a KQI of an application.

A principle of the random forest model is: A random forest algorithm is based on a decision tree, a main idea thereof is to classify sample data with KQI predicted results good, medium and poor into three types, find a characteristic property of each type of data, and establish the decision tree. A process of performing KQI prediction by using the decision tree includes: testing, starting from a root node, a corresponding characteristic property in to-be-predicted KPI data, selecting an output branch based on a value of the characteristic property until reaching a leaf node, and using a type in which the leaf node is stored as a decision result, that is, a KQI result value.

A fundamental principle of logistic regression is: Positive samples and negative samples that have a same quantity are collected, and these samples are drawn. A line distinguishes the two types of samples, and the fitted curve is a regression curve. The model training process is a process of finding the line by using a large amount of data and fitting an expression of the line. New to-be-predicted data is classified by using the line. In this application, the KPI data is classified into three types by using a method of simulating the regression curve, and corresponding KQI results are respectively good, medium, and poor. An algorithm formula of logistic regression is: $y = \dfrac{1}{1+e^{-z}}$, where $z = w1 * x1 + w2 * x2 + w3 * x3 + \cdots + wn * xn$, $w$ is an undetermined parameter, $x$ is a feature value of each dimension (for example, for a three-dimensional plane, the data $x$ has three feature values) of the KPI data, and $y$ is the obtained KQI result. Subsequently, these output results are compared with actual result values of the sample, and a parameter value of the fitted line (namely, the regression curve) is adjusted based on a comparison result, to optimize the parameter $w$ of the fitted line and make the logistic regression model more accurate.

When the algorithm formulas of the three types of models are determined, the weight coefficients of the three types of models further need to be determined.

504: Generate the target predictive model based on the weight coefficients of the support vector machine SVM model, the random forest model, and the logistic regression model in the target predictive model.

In this application, an algorithm formula of the target predictive model after combination is: a result value Q predicted by the target predictive model = X * a result value predicted by the SVM model + Y * a result value predicted by the random forest model + Z * a result value predicted by the logistic regression model.

The model training process is described below with reference to specific application scenarios.

1. An analysis apparatus generates a predictive model for a video service.

The analysis apparatus first determines a network KPI parameter, and obtains a KQI result of the KPI parameter for the video service. A large quantity of KPI parameters and KQI results are obtained by repetitively performing this step. Therefore, an association relationship between the KPI parameter and the KQI result is found, and an algorithm formula of the predictive model is determined. The algorithm formula of the predictive model is: the result value Q predicted by the target predictive model = X * the result value predicted by the SVM model + Y * the result value predicted by the random forest model + Z * the result value predicted by the logistic regression model. By substituting a large amount of different KPI data and corresponding KQI predicted result values of the KPI data into the algorithm formula, it is obtained that parameters X = x1, Y = y1, and Z = z1, and X, Y and Z are made into fixed values, so that in a subsequent model prediction process, the KQI result value Q can be obtained by substituting the KPI data.

A possible case is that, for the video service, the percentage x1 of the predicted result of the SVM model in the total predicted result value is greater than the percentage y1 of the predicted result of the random forest model in the total predicted result value, and y1 is greater than the percentage z1 of the predicted result of the logistic regression model in the total predicted result value. That is, for the video service, the weight coefficient of the SVM model prediction result in the target predictive model is the greatest.

2. The analysis apparatus generates a predictive model for a voice service.

The analysis apparatus first determines a network KPI parameter, and obtains a KQI result of the KPI parameter for the voice service. A large quantity of KPI parameters and KQI results are obtained by repetitively performing this step. Therefore, an association relationship between the KPI parameter and the KQI result is found, and an algorithm formula of the predictive model is determined. It is obtained that the parameters X = x2, Y = y2, and Z = z2. A determining process of the parameters in the algorithm formula of the predictive model is similar to that for the video service, and details are not described herein again.

A possible case is that, for the voice service, the percentage y2 of the predicted result of the random forest model in the total predicted result value is greater than the percentage x2 of the predicted result of the SVM model in the total predicted result value, and x2 is greater than the percentage z2 of the predicted result of the logistic regression model in the total predicted result value. That is, for the voice service, the weight coefficient of the random forest model prediction result in the target predictive model is the greatest.

3. The analysis apparatus generates a predictive model for a multimedia service.

The analysis apparatus first determines a network KPI parameter, and obtains a KQI result of the KPI parameter for the voice service. A large quantity of KPI parameters and KQI results are obtained by repetitively performing this step. Therefore, an association relationship between the KPI parameter and the KQI result is found, and an algorithm formula of the predictive model is determined. It is obtained that the parameters X = x3, Y = y3, and Z = z3. A determining process of the parameters in the algorithm formula of the predictive model is similar to that for the video service, and details are not described herein again.

A possible case is that, for the voice service, the percentage z3 of the predicted result of the logistic regression model in the total predicted result value is greater than the percentage y3 of the predicted result of the random forest model in the total predicted result value, and y3 is greater than the percentage x3 of the predicted result of the SVM model in the total predicted result value. That is, for the multimedia service, the weight coefficient of the logistic regression model prediction result in the target predictive model is the greatest.

505. Add the target predictive model to a predictive model set.

506. Obtain to-be-predicted data of the service.

507. Determine, based on a type identifier, the target predictive model in the predictive model set.

508. Determine, based on the target predictive model and a KPI in the to-be-predicted data, a key quality indicator KQI of the service.

In this embodiment, embodiment step 506 to step 508 are similar to embodiment step 201 to step 203 shown in FIG. 2a, and details are not specifically described herein again.

In this embodiment, in the training process of the target predictive model, besides the algorithm formulas of the SVM model, the random forest model, and the logistic regression model, the weight coefficients of the three types of models in the target predictive model further needs to be determined. A specific training process for the target predictive model is described in this embodiment, to increase feasibility of the solution.

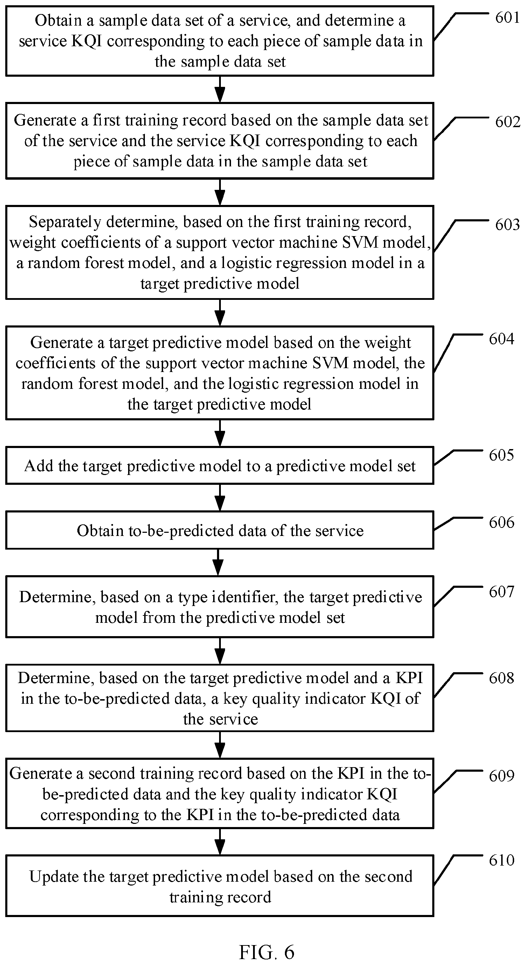

In this embodiment, after the target predictive model is generated, a to-be-predicted KPI can be obtained, a predicted KQI result can be determined, and the to-be-predicted KPI and the predicted KQI result can be recorded. Subsequently, the KPI and the KQI result are used to update the target predictive model and adjust the parameter of the target predictive model. All subsequent KPI parameters and predicted KQI result values that are inputted into the target predictive model can be used to update the target predictive model, to make the predictive model more accurate through repetitive training. Referring to FIG. 6, FIG. 6 is described below.

601. Obtain a sample data set of a service, and determine a service KQI corresponding to each piece of sample data in the sample data set.

602. Generate a first training record based on the sample data set of the service and the service KQI corresponding to each piece of sample data in the sample data set.

603. Separately determine, based on the first training record, weight coefficients of a support vector machine SVM model, a random forest model, and a logistic regression model in a target predictive model.

604. Generate the target predictive model based on the weight coefficients of the support vector machine SVM model, the random forest model, and the logistic regression model in the target predictive model.

605. Add the target predictive model to a predictive model set.

606. Obtain to-be-predicted data of the service.

607. Determine, based on a type identifier, the target predictive model in the predictive model set.

608. Determine, based on the target predictive model and a KPI, a key quality indicator KQI of the service.

609. Generate a second training record of a KPI in the to-be-predicted data and a key quality indicator KQI corresponding to the KPI in the to-be-predicted data.

Because of insufficient sample data volume or another uncontrollable factor, a model obtained through training is not necessarily completely accurate, and there is a high probability that a KQI result obtained by substituting KPI data into the predictive model has a deviation from a theoretical KQI result of the predictive model. Using coin flipping as an example, after flipping a coin for a plurality of times, a probability of heading up is 40 percent through calculation. However, in a subsequent process of flipping the coin repeatedly, it is found that the probability of heading up is not necessarily 40 percent. Therefore, a subsequent actual experiment result can be combined with the result of the predictive model, to adjust the predictive model. In this application, an obtained theoretical KQI result of the predictive model may be good, but an actual KQI result of the to-be-predicted data is medium. Therefore, an analysis apparatus needs to record KPI data in the to-be-predicted data and a KQI result generated after substituting the KPI data into the predictive model, generate the second training record, place the training record into a storage space, and subsequently adjust the parameter based on an actual KQI result.

610. Update the target predictive model based on the second training record.

When the recorded second training record reaches a specific amount of data, the second training record is reused as the sample data, and is substituted into an existing target predictive model, to adjust an algorithm parameter of the target predictive model with reference to the actual KQI result of the to-be-predicted data, that is, a process of updating the target predictive model, so that the target predictive model is more accurate.

For example, in the process of updating the prediction model, a volume of sample data with KQI results poor is 50, and volumes of sample data with KQI results good and medium are both 200. However, the predictive model may need more low KQI values as the training record, and subsequently, when the predictive model is used, the predicted result is obtained by inputting the to-be-predicted data. For example, a data volume of to-be-predicted data is 10000, a data volume of low KQIs is 5000, and there are a relatively large quantity of low KQI values in the to-be-predicted data. Therefore, the analysis apparatus can retrain the predictive model by using the to-be-predicted data as the sample, adjust the parameters of the predictive model with reference to the KQI results corresponding to the to-be-predicted KPI in an actual case, and generate a new predictive model, that is, a process of optimizing the predictive model. In this case, model training can be performed by using the sample data, and the to-be-predicted 10000 pieces of data with reference to the previous 450 pieces of sample data.

In this embodiment, a process in which the to-be-predicted data is reversed as the sample data to update the target predictive model is described, to increase flexibility of solution implementation.

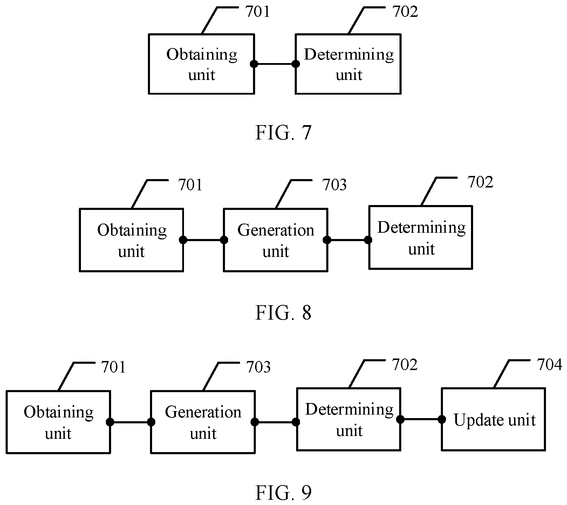

FIG. 2a, FIG. 5 and FIG. 6 describe the indicator determining method of the embodiments of this application. Referring to FIG. 7, an analysis apparatus in this embodiment of this application is described below.

In this embodiment of this application, the analysis apparatus includes:

an obtaining unit 701, configured to obtain to-be-predicted data of a service, where the to-be-predicted data includes a key performance indicator KPI of a network in which the service is located and a type identifier of the service, and the type identifier is used to indicate a type of the service; and

a determining unit 702, configured to determine, based on the type identifier, a target predictive model in a predictive model set, where the predictive model set includes at least one predictive model, each predictive model in the predictive model set corresponds to one service type, and

the determining unit 702 is further configured to determine, based on the target predictive model and the KPI in the to-be-predicted data, a key quality indicator KQI of the service.

In this embodiment, when the KQI of the service is predicted by using the network KPI parameter, it is considered that services of different service types have different predictive models, so that a KQI result of the service predicted by using the network KPI parameter is more accurate.

In an embodiment of this application, as shown in FIG. 8, the analysis apparatus further includes a generation unit 703, and the generation unit 703 is described below.

The obtaining unit 701 is further configured to obtain a sample data set of the service, where the sample data set includes at least one piece of sample data, and each piece of sample data in the sample data set includes the KPI of the network in which the service is located.

The generation unit 703 is configured to: determine a service KQI corresponding to each piece of sample data in the sample data set, generate a first training record based on the sample data set of the service and the service KQI corresponding to each piece of sample data in the sample data set, generate the target predictive model based on the first training record, and add the target predictive model to the predictive model set.

In an implementation, when generating the target predictive model based on the first training record, the generation unit 703 is configured to:

separately determine, based on the first training record, weight coefficients of a support vector machine SVM model, a random forest model, and a logistic regression model in the target predictive model; and

generate the target predictive model based on the weight coefficients of the support vector machine SVM model, the random forest model, and the logistic regression model in the target predictive model.

In this embodiment, a determining process for the target predictive model is described, to increase feasibility of the solution.

In this embodiment, the to-be-predicted data may further be inputted into the target predictive model again as sample data, to adjust a parameter and optimize the target predictive model. In this case, referring to FIG. 9, the analysis apparatus further includes an update unit 704.

The generation unit 703 is further configured to generate a second training record of the KPI in the to-be-predicted data and the key quality indicator KQI corresponding to the KPI in the to-be-predicted data.

The update unit 704 is configured to update the target predictive model based on the second training record.

In this embodiment, the analysis apparatus may adjust the parameter based on the second training record with reference to an actual KQI result of the to-be-predicted data, to optimize the predictive model.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The software product is stored in a storage medium and includes several instructions for instructing a computer device (which may be a personal computer, a local client, or a network device) to perform all or some of the steps of the methods described in the embodiments of FIG. 2a, FIG. 2b, FIG. 5 and FIG. 6 in this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

The foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof without departing from the scope of the technical solutions of the embodiments of this application.

## Claims

1. An indicator determining method, comprising:

   obtaining to-be-predicted data of a service, wherein the to-be-predicted data comprises a key performance indicator KPI of a network in which the service is located and a type identifier of the service, and the type identifier is used to indicate a type of the service;
   determining, based on the type identifier, a target predictive model in a predictive model set, wherein the predictive model set comprises at least one predictive model, and each predictive model in the predictive model set corresponds to one service type; and
   determining, based on the target predictive model and the KPI in the to-be-predicted data, a key quality indicator KQI of the service.

2. The method according to claim 1, wherein before the determining, based on the type identifier of the service, a target predictive model in a predictive model set, the method further comprises:

   obtaining a sample data set of the service, wherein the sample data set comprises at least one piece of sample data, and each piece of sample data in the sample data set comprises the KPI of the network in which the service is located;
   determining a service KQI corresponding to each piece of sample data in the sample data set;
   generating a first training record based on the sample data set of the service and the service KQI corresponding to each piece of sample data in the sample data set;
   generating the target predictive model based on the first training record; and
   adding the target predictive model to the predictive model set.

3. The method according to claim 2, wherein the generating the target predictive model based on the first training record comprises:

   separately determining, based on the first training record, weight coefficients of a support vector machine SVM model, a random forest model, and a logistic regression model in the target predictive model; and
   generating the target predictive model based on the weight coefficients of the support vector machine SVM model, the random forest model, and the logistic regression model in the target predictive model.

4. The method according to claim 2 or 3, wherein the sample data set comprises first sample data, second sample data, and third sample data, a first KQI corresponding to the first sample data is less than a second KQI corresponding to the second sample data, the second KQI corresponding to the second sample data is less than a third KQI corresponding to the third sample data, and data volumes of the first sample data, the second sample data and the third sample data are equal.

5. The method according to claim 2 or 3, wherein the sample data set comprises fourth sample data, and a fourth KQI corresponding to the fourth sample data is less than a preset KQI threshold.

6. The method according to claim 3, wherein the weight coefficients of the SVM model, the random forest model, and the logistic regression model in the target predictive model are respectively X, Y and Z, and a result value Q predicted by the target predictive model = X * a result value predicted by the SVM model + Y * a result value predicted by the random forest model + Z * a result value predicted by the logistic regression model.

**7.** The method according to claim 6, wherein the type of the service is a video service, the result value Q predicted by the target predictive model = x1 * the result value predicted by the SVM model + y1 * the result value predicted by the random forest model + z1 * the result value predicted by the logistic regression model, and x1 > y1 > z1.

**8.** The method according to claim 6, wherein the type of the service is a voice service, the result value Q predicted by the target predictive model = x2 * the result value predicted by the SVM model + y2 * the result value predicted by the random forest model + z2 * the result value predicted by the logistic regression model, and y2 > x2 > z2.

**9.** The method according to claim 6, wherein the type of the service is a multimedia service, the result value Q predicted by the target predictive model = x3 * the result value predicted by the SVM model + y3 * the result value predicted by the random forest model + z3 * the result value predicted by the logistic regression model, and z3 > y3 > x3.

**10.** The method according to claim 2, 3, or any one of claims 6 to 9, wherein after the determining, based on the target predictive model and the KPI in the to-be-predicted data, a key quality indicator KQI of the service, the method further comprises:

generating a second training record of the KPI in the to-be-predicted data and the key quality indicator KQI corresponding to the KPI in the to-be-predicted data; and
updating the target predictive model based on the second training record.

**11.** An analysis apparatus, comprising:

an obtaining unit, configured to obtain to-be-predicted data of a service, wherein the to-be-predicted data comprises a key performance indicator KPI of a network in which the service is located and a type identifier of the service, and the type identifier is used to indicate a type of the service; and
a determining unit, configured to determine, based on the type identifier, a target predictive model in a predictive model set, wherein the predictive model set comprises at least one predictive model, each predictive model in the predictive model set corresponds to one service type, and
the determining unit is further configured to determine, based on the target predictive model and the KPI in the to-be-predicted data, a key quality indicator KQI of the service.

**12.** The analysis apparatus according to claim 11, wherein the analysis apparatus further comprises a generation unit;
the obtaining unit is further configured to obtain a sample data set of the service, wherein the sample data set comprises at least one piece of sample data, and each piece of sample data in the sample data set comprises the KPI of the network in which the service is located; and
the generation unit is configured to: determine a service KQI corresponding to each piece of sample data in the sample data set, generate a first training record based on the sample data set of the service and the service KQI corresponding to each piece of sample data in the sample data set, generate the target predictive model based on the first training record, and add the target predictive model to the predictive model set.

**13.** The analysis apparatus according to claim 12, wherein when generating the target predictive model based on the first training record, the generation unit is configured to:

separately determine, based on the first training record, weight coefficients of a support vector machine SVM model, a random forest model, and a logistic regression model in the target predictive model; and
generate the target predictive model based on the weight coefficients of the support vector machine SVM model, the random forest model, and the logistic regression model in the target predictive model.

**14.** The analysis apparatus according to claim 12 or 13, wherein the analysis apparatus further comprises an update unit;
the generation unit is further configured to generate a second training record of the KPI in the to-be-predicted data and the key quality indicator KQI corresponding to the KPI in the to-be-predicted data; and
the update unit is configured to update the target predictive model based on the second training record.

**15.** A computing device, comprising a processor and a memory, wherein
the memory is configured to store program code; and
the processor is configured to execute the program code in the memory, to implement the method according to any one of claims 1 to 10.

**16.** A computer-readable storage medium, comprising an instruction, wherein when the instruction is run on a computer, the computer is enabled to perform the method according to any one of claims 1 to 10.

17. A computer program product comprising an instruction, wherein when the computer program product is run on a computer, the computer is enabled to perform the method according to any one of claims 1 to 10.

Processor — Memory

Analysis apparatus

FIG. 1a

Network adapter — Processor — Memory

Analysis apparatus

FIG. 1b

AP device — Network adapter — Processor — Memory

Analysis apparatus

FIG. 1c

Processor — Dedicated chip — Memory

Analysis apparatus

FIG. 1d

Processor

Storage device

Analysis apparatus

FIG. 1e

Obtain to-be-predicted data of a service — 201

Determine, based on a type identifier, a target predictive model in a predictive model set — 202

Determine, based on the target predictive model and a KPI in the to-be-predicted data, a KQI of the service — 203

FIG. 2a

A. Obtain a sample data set of a service

B. Generate a first training record based on the sample data set of the service and a service KQI set

C. Generate a target predictive model based on the first training record

D. Add the target predictive model to a predictive model set

FIG. 2b

| Moment | Latency | Negotiated rate | RSSI | Channel utilization rate | Web experience | Call experience |
|--------|---------|-----------------|------|--------------------------|----------------|-----------------|
| 1 | 50 ms | 0 | −66 dbm | 40 | Good | Poor |
| 2 | 100 ms | 1 | −88 dbm | 50 | Poor | Poor |
| 3 | ... | | | | | |

FIG. 3

| Moment | Latency | Negotiated rate | RSSI | Channel utilization rate | Web experience |
|--------|---------|-----------------|------|--------------------------|----------------|
| 1 | 50 ms | 0 | −66 dbm | 40 | Good |
| 2 | 60 ms | 1 | −77 dbm | 50 | Good |
| 3 | ... | | | | |

| Moment | Latency | Negotiated rate | RSSI | Channel utilization rate | Web experience |
|--------|---------|-----------------|------|--------------------------|----------------|
| 4 | 70 ms | 0 | −55 dbm | 35 | Medium |
| 5 | 80 ms | 1 | −60 dbm | 40 | Medium |
| 6 | ... | | | | |

| Moment | Latency | Negotiated rate | RSSI | Channel utilization rate | Web experience |
|--------|---------|-----------------|------|--------------------------|----------------|
| 7 | 90 ms | 0 | −50 dbm | 30 | Poor |
| 8 | 100 ms | 1 | −40 dbm | 20 | Poor |
| 9 | ... | | | | |

FIG. 4

Obtain a sample data set of a service, and determine a service KQI corresponding to each piece of sample data in the sample data set — 501

Generate a first training record based on the sample data set of the service and the service KQI corresponding to each piece of sample data in the sample data set — 502

Separately determine, based on the first training record, weight coefficients of a support vector machine SVM model, a random forest model, and a logistic regression model in a target predictive model — 503

Generate the target predictive model based on the weight coefficients of the support vector machine SVM model, the random forest model, and the logistic regression model in the target predictive model — 504

Add the target predictive model to a predictive model set — 505

Obtain to-be-predicted data of the service — 506

Determine, based on a type identifier, the target predictive model from the predictive model set — 507

Determine, based on the target predictive model and a KPI in the to-be-predicted data, a key quality indicator KQI of the service — 508

FIG. 5

Obtain a sample data set of a service, and determine a service KQI corresponding to each piece of sample data in the sample data set — 601

Generate a first training record based on the sample data set of the service and the service KQI corresponding to each piece of sample data in the sample data set — 602

Separately determine, based on the first training record, weight coefficients of a support vector machine SVM model, a random forest model, and a logistic regression model in a target predictive model — 603

Generate a target predictive model based on the weight coefficients of the support vector machine SVM model, the random forest model, and the logistic regression model in the target predictive model — 604

Add the target predictive model to a predictive model set — 605

Obtain to-be-predicted data of the service — 606

Determine, based on a type identifier, the target predictive model from the predictive model set — 607

Determine, based on the target predictive model and a KPI in the to-be-predicted data, a key quality indicator KQI of the service — 608

Generate a second training record based on the KPI in the to-be-predicted data and the key quality indicator KQI corresponding to the KPI in the to-be-predicted data — 609

Update the target predictive model based on the second training record — 610

FIG. 6

701

702

Obtaining
unit

Determining
unit

FIG. 7

701

703

702

Obtaining
unit

Generation
unit

Determining
unit

FIG. 8

701

703

702

704

Obtaining
unit

Generation
unit

Determining
unit

Update unit

FIG. 9

## INTERNATIONAL SEARCH REPORT

| International application No. |
| --- |
| **PCT/CN2019/076124** |

| **A.** | **CLASSIFICATION OF SUBJECT MATTER** |
| --- | --- |

H04L 12/24(2006.01)i

According to International Patent Classification (IPC) or to both national classification and IPC

| **B.** | **FIELDS SEARCHED** |
| --- | --- |

Minimum documentation searched (classification system followed by classification symbols)

H04L; H04W

Documentation searched other than minimum documentation to the extent that such documents are included in the fields searched

Electronic data base consulted during the international search (name of data base and, where practicable, search terms used)

CNABS; CNTXT; CNKI; VEN; WOTXT; USTXT; EPTXT; 3GPP: 业务, 服务, 类型, 视频, 语音, 音频, 多媒体, 关键绩效指标, 关键性能指标, KPI, 时延, 延时, 速率, 利用率, RSSI, 信号强度, 模型, 预测, 训练, 对应, 相应, 键质量指标, KQI, 向量机, SVM, 随机森林, 逻辑回归, 权重, service, type, video, voice, audio, multimedia, key perform+ indicat+, delay, rate, received signal strength indicat+, model, predict+, train+, corresponding, key quality indicat+, weight+

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| X | CN 107786997 A (LIU, JUNSHENG) 09 March 2018 (2018-03-09) see claims 1-10, description, paragraphs [0004], [0058] and [0063]-[0156], and figures 1-3 | 1, 2, 4, 5, 10-12, 14-17 |
| A | CN 107645393 A (ZTE CORPORATION) 30 January 2018 (2018-01-30) see entire document | 1-17 |
| A | CN 106934514 A (HUAWEI TECHNOLOGIES CO., LTD.) 07 July 2017 (2017-07-07) see entire document | 1-17 |
| A | US 2018006957 A1 (VERIZON PATENT AND LICENSING INC.) 04 January 2018 (2018-01-04) see entire document | 1-17 |
| A | JP 6085885 B2 (NIPPON TELEGRAPH AND TELEPHONE CORPORATION ET AL.) 01 March 2017 (2017-03-01) see entire document | 1-17 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **11 May 2019** | **31 May 2019** |

| Name and mailing address of the ISA/CN | Authorized officer |
| --- | --- |
| **National Intellectual Property Administration, PRC (ISA/CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2019/076124**

| Patent document cited in search report | | | Publication date (day/month/year) | Patent family member(s) | | | Publication date (day/month/year) |
|---|---|---|---|---|---|---|---|
| CN | 107786997 | A | 09 March 2018 | None | | | |
| CN | 107645393 | A | 30 January 2018 | WO | 2018014674 | A1 | 25 January 2018 |
| CN | 106934514 | A | 07 July 2017 | None | | | |
| US | 2018006957 | A1 | 04 January 2018 | US | 9992123 | B2 | 05 June 2018 |
| JP | 6085885 | B2 | 01 March 2017 | JP | 2015122579 | A | 02 July 2015 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201810260956